# EUROPÄISCHE PATENTSCHRIFT

(11) **EP 3 824 178 B1**
(45) Veröffentlichungstag und Bekanntmachung des Hinweises auf die Patenterteilung: **10.01.2024**
(21) Anmeldenummer: 19740562.4
(22) Anmeldetag: 16.07.2019
(51) Int. Cl.: F03D 9/00, F03D 9/19

(54) **FLUIDSPEICHERVORRICHTUNG FÜR EINE FLUID- UND/ODER ENERGIEBEREITSTELLUNGSEINRICHTUNG SOWIE ENTSPRECHENDE FLUID- UND/ODER ENERGIEBEREITSTELLUNGSEINRICHTUNG**
FLUID STORAGE APPARATUS FOR A FLUID AND/OR ENERGY SUPPLY DEVICE AND CORRESPONDING FLUID AND/OR ENERGY SUPPLY DEVICE
DISPOSITIF DE STOCKAGE DE FLUIDE POUR UN SYSTÈME DE FOURNITURE DE FLUIDE ET/OU D'ÉNERGIE AINSI QUE SYSTÈME DE FOURNITURE DE FLUIDE ET/OU D'ÉNERGIE CORRESPONDANT

(30) Priorität: 16.07.2018 DE 102018211800
(43) Veröffentlichungstag der Anmeldung: 26.05.2021
(73) Patentinhaber: Schierack, Horst, 53343 Wachtberg (DE)
(72) Erfinder: HANDCOCK, Elfie, 53343 Wachtberg (DE); SCHIERACK, Horst, 53343 Wachtberg (DE)
(74) Vertreter: Dietz, Christopher Friedrich
(86) Internationale Anmeldenummer: PCT/EP2019/069121
(87) Internationale Veröffentlichungsnummer: WO 2020/016226

(56) Entgegenhaltungen:
- WO-A1-01/36817
- DE-A1-102005 043 444
- FR-A1- 2 854 205
- FR-B1- 2 854 205
- US-B1- 7 471 010

## Beschreibung

Die Erfindung betrifft eine Fluidspeichervorrichtung für eine Fluid- und/oder Energiebereitstellungseinrichtung sowie eine entsprechende Fluid- und/oder Energiebereitstellungseinrichtung. Letztere verfügt über eine Solarnutzungseinrichtung und/oder eine Windkraftanlage sowie eine Fluidspeichervorrichtung und ist dazu ausgebildet, mittels von der Solarnutzungseinrichtung und/oder von der Windkraftanlage bereitgestellter Energie Wasser durch Elektrolyse in Wasserstoff und Sauerstoff aufzuspalten und den Wasserstoff in einem ersten Speichertank und den Sauerstoff in wenigstens einem zweiten Speichertank zwischenzuspeichern.

Aus dem Stand der Technik ist beispielsweise die Druckschrift US 3,562,986 bekannt, welche einen Tank für eine Flüssigkeit beschreibt. Weiterhin beschreibt die Druckschrift US 2008/0008588 A1 ein verteiltes System zur Energiebereitstellung, welches mittels einer schiffsgebundenen Windkraftanlage elektrischen Strom bereitstellt und diesen zum Aufspalten von Wasser in Wasserstoff und Sauerstoff nutzt. Der Wasserstoff und der Sauerstoff werden mittels des Schiffs einer landgestützten Einrichtung zugeführt und dort in Erdgas umgesetzt, welches schlussendlich zur Bereitstellung von elektrischer Energie verwendet wird.

Weiterhin offenbart die Druckschrift DE 10 2005 043 444 A1 eine Windkraftanlage, die einen zentralen annähernd zylinderförmigen oder vieleckigen Turm aufweist, der allein steht oder ein Teil eines Windrotor-Trägers ist, wobei der zentrale Turm der Windkraftanlage mit einem Druckluft-Reservoir oder einem Druck-Wasserstoff-Reservoir integriert ist.

Schließlich zeigt die Druckschrift WO 01/36817 A1 ein Verfahren und eine Vorrichtung zum Herstellen und Speichern von Wasserstoff und/oder von Gas, welches aus einer Elektrolyse von Wasser unter Verwendung von elektrischer Energie aus Windkraft stammt. Das Gas wird in einem Drucktank gespeichert, der in einem eine Windkraftanlage tragenden Turm angeordnet ist.

Es ist Aufgabe der Erfindung, eine Fluidspeichervorrichtung für eine Fluid- und/oder Energiebereitstellungseinrichtung vorzuschlagen, welche gegenüber bekannten Fluidspeichervorrichtungen Vorteile aufweist, insbesondere einen kostengünstigen Aufbau aus Standardelementen bei gleichzeitig hoher Dauerfestigkeit und erweiterten Integrationsmöglichkeiten ermöglicht.

Dies wird erfindungsgemäß mit einer Fluidspeichervorrichtung für eine Fluid- und/oder Energiebereitstellungseinrichtung mit den Merkmalen des Anspruchs 1 erreicht. Dabei sind eine erste Tankanordnung für ein erstes Fluid und eine zweite Tankanordnung für ein zweites Fluid vorgesehen, wobei die erste Tankanordnung einen ersten Speichertank in einem mittels einer Gründung verankerten, sich in axialer Richtung bezüglich seiner Längsmittelachse in die Gründung hinein erstreckenden Speicherturm und die zweite Tankanordnung mehrere separat angeordnete zweite Speichertanks aufweist, die in Umfangsrichtung um den Speicherturm verteilt angeordnet, zur Versteifung des Speicherturms an diesem befestigt und sich an der Gründung abstützen und/oder an dieser befestigt sind und/oder mehrfach an dem Speicherturm befestigt sind.

Die Fluid- und/oder Energiebereitstellungseinrichtung dient zur Bereitstellung wenigstens eines Fluids, insbesondere mehrerer Fluide, und/oder von Energie, insbesondere von elektrischer Energie. Das Fluid ist vorzugsweise ein Gas, beispielsweise Wasserstoff oder Sauerstoff. Bevorzugt können mittels der Fluid- und/oder Energiebereitstellungseinrichtung sowohl Wasserstoff als auch Sauerstoff bereitgestellt werden. Im Rahmen der Fluid- und/oder der Energiebereitstellungseinrichtung wird regenerative Energie, insbesondere solare Energie und/oder Windenergie, zur Erzeugung und nachfolgenden Bereitstellung des wenigstens einen Fluids und/oder zur Bereitstellung von elektrischer Energie herangezogen. Beispielsweise ist es vorgesehen, die regenerative Energie entweder unmittelbar in elektrische Energie umzuwandeln oder die regenerative Energie zum Erzeugen von Wasserstoff und Sauerstoff zu nutzen. Selbstverständlich kann es auch vorgesehen sein, die regenerative Energie - in Abhängigkeit von ihrer Verfügbarkeit - teilweise zur Bereitstellung der elektrischen Energie und teilweise zum Erzeugen von Wasserstoff und Sauerstoff heranzuziehen.

Der Wasserstoff und der Sauerstoff, welche unter dem Einsatz der regenerativen Energie erzeugt wurden, können ebenfalls zur Bereitstellung von elektrischer Energie verwendet werden, insbesondere falls momentan keine regenerative Energie oder zu wenig regenerative Energie zur unmittelbaren Bereitstellung der elektrischen Energie verfügbar ist. Bevorzugt können der Wasserstoff und der Sauerstoff mithilfe der Fluidspeichervorrichtung zwischengespeichert werden. Beispielsweise ist es vorgesehen, im Falle eines Überschusses von regenerativer Energie diese zumindest teilweise zur Erzeugung von Wasserstoff und Sauerstoff zu verwenden. Der Wasserstoff und der Sauerstoff werden in der Fluidspeichervorrichtung gespeichert, insbesondere bei Überdruck, also einem Druck, der höher ist als ein Umgebungsdruck. Liegt nachfolgend ein Mangel an regenerativer Energie vor, kann also der Bedarf an elektrischer Energie nicht oder zumindest nicht allein mittels der regenerativen Energie gedeckt werden, so werden der Wasserstoff und der Sauerstoff der Fluidspeichervorrichtung entnommen und zur zumindest teilweisen oder vollständigen Bereitstellung der elektrischen Energie herangezogen.

In einer bevorzugten Ausgestaltung ist die Fluid- und/oder Energiebereitstellungseinrichtung zur Nutzung mehrerer, insbesondere unterschiedlicher, regenerativer Energiequellen vorgesehen und ausgebildet. Beispielsweise verfügt die Fluid- und/oder Energiebereitstellungseinrichtung über eine Einrichtung zur Nutzung solarer Energie sowie eine Einrichtung zur Nutzung von Windkraft. Die Einrichtung zur Nutzung solarer Energie kann auch als Solarnutzungseinrichtung bezeichnet werden. Die Solarnutzungseinrichtung weist beispielsweise wenigstens einen Solarkollektor, insbesondere einen Parabolkollektor, und/oder wenigstens ein Solarmodul auf. Das Solarmodul kann auch als Solarzellenmodul bezeichnet werden.

Die Fluidspeichervorrichtung ist beispielsweise Bestandteil der Fluid- und/oder Energiebereitstellungseinrichtung, kann jedoch selbstverständlich auch separat von dieser eingesetzt werden. Die Fluidspeichervorrichtung ist kompakt und platzsparend ausgebildet und kann zudem zur Halterung der Solarnutzungseinrichtung und/oder der Windkraftanlage herangezogen werden. Die Fluidspeichervorrichtung verfügt über mehrere Tankanordnungen für mehrere Fluide, nämlich über die erste Tankanordnung für das erste Fluid und die zweite Tankanordnung für das zweite Fluid. Die erste Tankanordnung ist zur Zwischenspeicherung des ersten Fluids und die zweite Tankanordnung zur Zwischenspeicherung des zweiten Fluids vorgesehen und ausgebildet. Das erste Fluid ist beispielsweise Wasserstoff und das zweite Fluid Sauerstoff.

Die erste Tankanordnung weist den ersten Speichertank auf, vorzugsweise genau einen ersten Speichertank. Das für das erste Fluid von der Fluidspeichervorrichtung bereitgestellte Speichervolumen wird also allein mittels des einen ersten Speichertanks bereitgestellt. Die zweite Tankanordnung verfügt hingegen über mehrere separate zweite Speichertanks, sodass das von der Fluidspeichervorrichtung für das zweite Fluid bereitgestellte Speichervolumen von den mehreren zweiten Speichertanks gemeinsam bereitgestellt wird. Beispielsweise entspricht das Speichervolumen der Fluidspeichervorrichtung für das erste Fluid zumindest dem Speichervolumen für das zweite Fluid, bevorzugt ist jedoch das Speichervolumen für das erste Fluid größer als das Speichervolumen für das zweite Fluid. Besonders bevorzugt ist das Speichervolumen für das erste Fluid mindestens 50 %, mindestens 75 % oder mindestens 100 % größer als das Speichervolumen für das zweite Fluid. Bevorzugt entspricht das Verhältnis zwischen dem Speichervolumen für das erste Fluid und dem Speichervolumen für das zweite Fluid dem Volumenverhältnis zwischen dem bei der Elektrolyse anfallenden Wasserstoff und Sauerstoff.

Der erste Speichertank liegt in dem Speicherturm vor, welcher wiederum mit der Gründung verbunden ist. Beispielsweise stützt sich der Speicherturm über einen Tragring an der Gründung ab. Der Tragring ist an dem Speicherturm befestigt, beispielsweise mit ihm verschweißt und/oder verschraubt. Der Tragring ist vorzugsweise in Umfangsrichtung durchgehend an dem Speicherturm ausgebildet, umgreift diesen also vollständig. Der erste Speichertank wird von einer Wand des Speicherturms begrenzt beziehungsweise eingeschlossen. Die Gründung dient der ortsfesten Anordnung und Befestigung des Speicherturms bezüglich eines Untergrunds. Bevorzugt weist der Speicherturm einen zylindrischen, insbesondere einen kreiszylindrischen, Querschnitt auf. Besonders bevorzugt besteht er zumindest bereichsweise aus Metall, insbesondere setzt er sich aus wenigstens einem Metallrohr, bevorzugt mehreren miteinander verbundenen Metallrohren, zusammen. Die Metallrohre sind endseitig jeweils mittels eines Deckels verschlossen. Das bedeutet, dass der Speicherturm und entsprechend der erste Speichertank der ersten Tankanordnung aus Standardkomponenten auf besonders kostengünstige Art und Weise aufgebaut werden kann. Die Gründung weist beispielsweise ein Fundament auf, welches bevorzugt aus Beton besteht. Es kann jedoch alternativ auch ein anderes Material für das Fundament verwendet werden. In jedem Fall stützt sich der Speicherturm über die Gründung, insbesondere über das Fundament, an dem Untergrund ab.

Um eine besonders hohe Standfestigkeit des Speicherturms zu erzielen, greift der Speicherturm in die Gründung ein. Das bedeutet, dass der Speicherturm vorzugsweise in axialer Richtung einerseits in den Untergrund, auf oder in welchem die Gründung angeordnet ist, oder zumindest in die Gründung eingreift, und andererseits sich in die von dem Untergrund beziehungsweise die Gründung abgewandte Richtung erstreckt. Die Gründung kann in oder auf dem Untergrund angeordnet sein. Beispielsweise stützt sich der Speicherturm über eine Stützzarge der Gründung an dem Untergrund ab. Unter der Stützzarge ist zum Beispiel ein hohlzylindrisches, insbesondere hohlkreiszylindrisches Stützteil zu verstehen, in welches der Speicherturm eingreift. Bevorzugt stützt sich der Speicherturm mit dem vorstehend erwähnten Tragring an einer Stirnseite der Stützzarge ab, nämlich auf ihrer dem Untergrund abgewandten Seite. Mit jeder der beschriebenen Ausgestaltungen wird zum einen eine günstigere Schwerpunktlage des Speicherturms erzielt. Andererseits ergeben sich weitere Vorteile, auf welche nachfolgend noch eingegangen werden wird.

Um die Steifigkeit des Speicherturms zu erhöhen, sind die mehreren zweiten Speichertanks um den Speicherturm verteilt angeordnet und an diesem befestigt. Beispielsweise sind die zweiten Speichertanks jeweils einerseits an dem Speicherturm und andererseits an der Gründung befestigt oder stützen sich zumindest an dieser ab. Durch das Abstützen der zweiten Speichertanks an der Gründung wird die Aufstandsfläche des Speicherturms auf der Gründung deutlich vergrößert. Sind zudem die zweiten Speichertanks an der Gründung befestigt, beispielsweise mittels einer Schraub- oder Bolzenverbindung, so ist eine verbesserte Standfestigkeit des Speicherturms realisiert. Alternativ oder zusätzlich kann es vorgesehen sein, dass die zweiten Speichertanks jeweils mehrfach an dem Speicherturm befestigt sind, insbesondere an voneinander beabstandeten Befestigungsstellen. Hierdurch wird eine deutliche Erhöhung der Steifigkeit des Speicherturms erzielt. In jedem Fall kann die Befestigung der zweiten Speichertanks an dem Speicherturm stoffschlüssig und/oder formschlüssig erfolgen, beispielsweise durch eine Schweißverbindung und/oder mittels einer Schraub- oder Bolzenverbindung. Insbesondere sind an dem Speicherturm Befestigungsflansche angeschweißt, an welchen die zweiten Speichertanks mittels Schrauben oder Bolzen befestigt sind. Zusätzlich oder alternativ kann es vorgesehen sein, dass zumindest ein Teil der zweiten Speichertanks oder alle zweiten Speichertanks lösbar an dem Speicherturm befestigt sind, insbesondere zu Wartungs- und/oder Inspektionszwecken.

Der erste Speichertank ist beispielsweise zur Aufnahme des ersten Fluids unter einem Druck von mindestens 100 bar, mindestens 150 bar, mindestens 200 bar, mindestens 250 bar oder mindestens 300 bar ausgebildet. Die zweiten Speichertanks sind vorzugsweise derart ausgebildet, dass sie zur Aufnahme des zweiten Fluids bei demselben Druck geeignet sind. In anderen Worten sollen der erste Speichertank und die zweiten Speichertanks derart ausgestaltet sein, dass das jeweilige Fluid in ihnen mit demselben maximalen Druck vorliegen kann. Insbesondere sind der erste Speichertank und die zweiten Speichertanks druckfest bis hin zu den genannten Drücken.

In axialer Richtung bezüglich der Längsmittelachse des Speicherturms gesehen weist dieser ausgehend von der Gründung in die von dem Untergrund abgewandte Richtung erste Abmessungen auf, wohingegen der in die Gründung eingreifende Teil des Speicherturms in axialer Richtung zweite Abmessungen aufweist. Die ersten Abmessungen sind größer als die zweiten Abmessungen, beispielsweise um einen Faktor von mindestens 5, mindestens 7,5, mindestens 10, mindestens 11, mindestens 12, mindestens 13, mindestens 14 oder mindestens 15. Beispielsweise weist der Speicherturm insgesamt in axialer Richtung Abmessungen von mindestens 20 m, vorzugsweise mindestens 24 m auf. Hiervon sind mindestens 5 %, mindestens 7,5 % oder mindestens 10 % in der Gründung und dem Untergrund aufgenommen. Beispielsweise sind wenigstens 2 m des Speicherturms in der Gründung und dem Untergrund angeordnet.

Um trotz dieser Abmessungen eine hinreichende Festigkeit des Speicherturms bei gleichzeitig begrenzter Materialstärke des Speicherturms zu erzielen, sind die zweiten Speichertanks zur Versteifung des Speicherturms an diesem befestigt. Bevorzugt sind die zweiten Speichertanks gleichmäßig in Umfangsrichtung verteilt um den Speicherturm angeordnet. Beispielsweise sind wenigstens vier, wenigstens sechs, wenigstens acht oder wenigstens zehn zweite Speichertanks vorgesehen. Die zweiten Speichertanks sind bevorzugt derart an dem Speicherturm angeordnet, dass sie in Umfangsrichtung voneinander beabstandet angeordnet sind, also einander nicht berühren. Mit einer derartigen Ausgestaltung wird eine besonders gute Stützwirkung der zweiten Speichertanks auf den Speicherturm bewirkt.

Die zweiten Speichertanks weisen in axialer Richtung bezüglich der Längsmittelachse des Speicherturms eine Erstreckung auf, welche höchstens 50 %, höchstens 40 %, höchstens 30 %, höchstens 25 % oder höchstens 20 % der Abmessungen des Speicherturms in dieser Richtung entspricht. Bevorzugt sind die zweiten Speichertanks im Querschnitt gesehen analog zu dem ersten Speichertank beziehungsweise dem Speicherturm zylindrisch, insbesondere kreiszylindrisch. Besonders bevorzugt sind die zweiten Speichertanks jeweils wenigstens einseitig, insbesondere beidseitig, mit einem kugelkalottenförmigen Deckel beziehungsweise Endstück verschlossen. Hierdurch wird eine hohe Druckfestigkeit der zweiten Speichertanks realisiert. Auch der erste Speichertank kann in axialer Richtung gesehen wenigstens einseitig, bevorzugt beidseitig, mit einem derartigen kugelkalottenförmigen Deckel beziehungsweise Endstück verschlossen sein.

Die beschriebene Ausgestaltung der Fluidspeichervorrichtung ermöglicht eine zuverlässige und sichere Zwischenspeicherung des ersten Fluids und des zweiten Fluids bei gleichzeitig geringem Platzbedarf, insbesondere eine Zwischenspeicherung unter hohem Druck. Zudem kann die Fluidspeichervorrichtung zur Abstützung von Elementen der Fluid- und/oder Energiebereitstellungseinrichtung herangezogen werden, beispielsweise sind an dem Speicherturm eine Traganordnung für die Solarnutzungseinrichtung und/oder eine Stützanordnung für die Windkraftanlage angeordnet und befestigt. Insbesondere bei Realisierung der die Fluidspeichervorrichtung aufweisenden Fluid- und/oder Energiebereitstellungseinrichtung, die die Solarnutzungseinrichtung und/oder die Windkraftanlage aufweist, ist ein besonders ökologischer Betrieb möglich. Durch die Bereitstellung des Fluids, insbesondere Wasserstoff, und/oder der Energie mittels der Fluid- und/oder Energiebereitstellungseinrichtung ergeben sich insbesondere hinsichtlich des Kohlenstoffdioxids Emissionsvorteile gegenüber herkömmlichen Anlagen. Die Kohlenstoffdioxidbilanz der Einrichtung ist daher bereits nach kurzer Zeit positiv, im Sinne einer Verringerung des ausgestoßenen Kohlenstoffdioxids.

Eine weitere Ausführungsform der Erfindung sieht vor, dass die zweiten Speichertanks jeweils an mehreren diskreten Befestigungsstellen oder in axialer Richtung durchgehend an dem Speicherturm befestigt sind. Die Befestigungsstellen sind voneinander beabstandet angeordnet, insbesondere in axialer Richtung. Vorzugsweise liegt zumindest ein Teil der Befestigungsstellen oder liegen alle Befestigungsstellen in der der Gründung abgewandten Hälfte des jeweiligen zweiten Speichertanks vor. Auf diese Art und Weise kann eine besonders zuverlässige und stabile Anbindung an den Speicherturm realisiert werden. Es kann jedoch auch vorgesehen sein, dass die Befestigungsstellen gleichmäßig in axialer Richtung über einen Großteil des zweiten Speichertanks oder den ganzen zweiten Speichertank verteilt an dem jeweiligen zweiten Speichertank angeordnet sind. Beispielsweise ist eine der Befestigungsstellen an einem ersten Ende des zweiten Speichertanks und eine andere der Befestigungsstellen an einem dem ersten Ende gegenüberliegenden zweiten Ende des zweiten Speichertanks angeordnet. Bezogen auf eine axiale Erstreckung des zweiten Speichertanks ist die eine der Befestigungsstellen beispielsweise höchstens 25 % von einem der Enden des zweiten Speichertanks entfernt angeordnet, die andere der Befestigungsstellen jedoch mindestens 75 % von demselben Ende.

Alternativ kann die Befestigung der zweiten Speichertanks an dem Speicherturm durchgehend ausgebildet sein, also sich über die gesamte Längserstreckung des zweiten Speichertanks oder zumindest einen Großteil der Längserstreckung des zweiten Speichertanks erstrecken. Das Befestigen der zweiten Speichertanks an dem Speicherturm, entweder an den diskreten Befestigungsstellen oder durchgehend, erfolgt besonders bevorzugt mittels einer Stoffschlussverbindung, beispielsweise durch Schweißen oder dergleichen. Die beschriebene Ausgestaltung ermöglicht eine besonders effektive Versteifung des Speicherturms.

Eine weitere bevorzugte Ausführungsform der Erfindung sieht vor, dass von dem Speicherturm beabstandet weitere zweite Speichertanks angeordnet sind, die an den zweiten Speichertanks befestigt sind. Zusätzlich zu den zweiten Speichertanks liegen also weitere zweite Speichertanks vor. Diese sind jedoch in radialer Richtung von dem Speicherturm beabstandet angeordnet, berühren diesen also nicht. Die weiteren zweiten Speichertanks sind an den zweiten Speichertanks befestigt. Beispielsweise ist jeder der weiteren zweiten Speichertanks einerseits an einem der zweiten Speichertanks und andererseits an einem anderen der zweiten Speichertanks befestigt, sodass die beiden zweiten Speichertanks über den weiteren zweiten Speichertank miteinander verbunden, insbesondere aneinander befestigt sind. Das Befestigen der weiteren zweiten Speichertanks an den zweiten Speichertanks erfolgt beispielsweise stoffschlüssig, insbesondere durch Schweißen, oder formschlüssig, beispielsweise mittels einer Bolzen- oder Schraubverbindung. Die weiteren zweiten Speichertanks können in axialer Richtung von der Gründung beabstandet angeordnet sein oder alternativ sich an der Gründung abstützen und/oder an dieser befestigt sein. In jedem Fall wird mittels der weiteren zweiten Speichertanks eine weitere Versteifung der Gesamtanordnung aus Speicherturm und zweiten Speichertanks sowie eine vorteilhafte Gewichtsverteilung erzielt.

Im Rahmen einer weiteren Ausführungsform der Erfindung kann vorgesehen sein, dass die Gründung wenigstens eine Bodenplatte aufweist, die in radialer Richtung größere Abmessungen aufweist als der Speicherturm. Die Bodenplatte dient der Abstützung des Speicherturms auf dem Untergrund. Die Bodenplatte liegt hierzu auf dem Untergrund und/oder einem Fundament der Gründung auf. Sie wird von dem Speicherturm in axialer Richtung durchgriffen, wohingegen die zweiten Speichertanks vorzugsweise an der Bodenplatte anliegen. Es kann auch vorgesehen sein, dass die zweiten Speichertanks von der Bodenplatte einseitig verschlossen sind. Die Bodenplatte besteht bevorzugt wenigstens bereichsweise oder sogar vollständig aus Metall. Falls die Bodenplatte dem endseitigen Verschließen der zweiten Speichertanks dient, besteht sie bevorzugt aus demselben Material wie die zweiten Speichertanks. Die Bodenplatte ist beispielsweise mittels einer formschlüssigen Verbindung, beispielsweise einer Schraubverbindung, an dem Fundament der Gründung befestigt.

Eine weitere Ausführungsform der Erfindung sieht vor, dass der Speicherturm die Bodenplatte durchgreift, sodass auf einer ersten Seite der Bodenplatte ein erster Teil des Speicherturms und auf einer der ersten Seite gegenüberliegenden zweiten Seite der Bodenplatte ein zweiter Teil des Speicherturms vorliegt, wobei die zweiten Speichertanks an dem ersten Teil des Speicherturms befestigt sind und der zweite Teil des Speicherturms eine als Mannloch ausgebildete Zugangsöffnung, insbesondere für den ersten Speichertank, aufweist. In anderen Worten liegt der Speicherturm in axialer Richtung gesehen beiderseits der Bodenplatte vor, sodass er von der Bodenplatte in den ersten Teil und den zweiten Teil aufgeteilt ist. Der erste Teil ist auf der dem Untergrund abgewandten Seite der Bodenplatte angeordnet, wohingegen der zweite Teil ausgehend von der Bodenplatte in den Untergrund eingreift.

Die zweiten Speichertanks sind an dem ersten Teil des Speicherturms befestigt, um diesen zu versteifen. In dem zweiten Teil des Speicherturms ist hingegen die Zugangsöffnung ausgebildet, welche als Mannloch ausgebildet ist. Entsprechend ermöglicht die Zugangsöffnung ein Einsteigen einer Person in den Speicherturm, insbesondere in den ersten Speichertank. Die Zugangsöffnung weist hierzu geeignete Abmessungen auf. Die Gründung, insbesondere das Fundament, ist derart ausgestaltet, dass die Zugangsöffnung zugänglich ist. Beispielsweise umgreift die Gründung, insbesondere das Fundament, den zweiten Teil des Speicherturms, ist jedoch in radialer Richtung von diesem beabstandet. Entsprechend ist in der Gründung beziehungsweise dem Fundament eine Ausnehmung ausgebildet, in die der Speicherturm hineinragt und insbesondere durchgreift. Beispielsweise ist die Ausnehmung in axialer Richtung gesehen einerseits von dem Fundament der Gründung und andererseits von der Bodenplatte der Gründung begrenzt, welche die Ausnehmung vollständig übergreift und verschließt. Es kann vorgesehen sein, dass sich der Speicherturm in axialer Richtung auf dem Fundament in axialer Richtung unmittelbar abstützt. Es kann jedoch auch vorgesehen sein, dass das Abstützen des Speicherturms an dem Fundament lediglich mittelbar erfolgt, nämlich beispielsweise über die Bodenplatte. Mit einer derartigen Ausgestaltung wird eine besonders gute Wartbarkeit bei gleichzeitig hoher Stabilität des Speicherturms realisiert.

Eine bevorzugte weitere Ausführungsform der Erfindung sieht vor, dass in dem Speicherturm ein zu dem ersten Speichertank koaxial angeordneter dritter Speichertank für ein drittes Fluid angeordnet ist. Der dritte Speichertank ist vorzugsweise in axialer Richtung gesehen auf der dem Untergrund beziehungsweise der Bodenplatte abgewandten Seite des ersten Speichertanks angeordnet. Beispielsweise schließt sich der dritte Speichertank unmittelbar an den ersten Speichertank an und ist lediglich über eine Trennwand von diesem strömungstechnisch getrennt. Der dritte Speichertank ist besonders bevorzugt zur drucklosen Zwischenspeicherung des dritten Fluids vorgesehen und ausgebildet. Das dritte Fluid ist beispielsweise Wasser, welches im Rahmen der vorstehend bereits beschriebenen Elektrolyse in Wasserstoff und Sauerstoff aufgespaltet wird. Das Vorsehen des dritten Speichertanks ermöglicht ein besonders autarkes Betreiben der Fluid- und/oder Energiebereitstellungseinrichtung.

Eine weitere bevorzugte Ausführungsform der Erfindung sieht vor, dass der dritte Speichertank in einem zumindest bereichsweise konisch ausgebildeten Abschlusselement des Speicherturms angeordnet ist. Das Abschlusselement dient beispielsweise als Endkappe des Speicherturms. Es kann vorgesehen sein, dass über das Abschlusselement die vorstehend bereits erwähnte Windkraftanlage an dem Speicherturm befestigt ist. Die konische Ausgestaltung des Abschlusselements ermöglicht eine besonders stabile Anbindung der Windkraftanlage an den Speicherturm.

Eine Weiterbildung der Erfindung sieht vor, dass das Abschlusselement über eine Flanschbefestigung an einem Grundkörper des Speicherturms befestigt ist, wobei zwischen dem Abschlusselement und dem Grundkörper eine den ersten Speichertank und den dritten Speichertank strömungstechnisch voneinander separierende Trennwand angeordnet ist. Zur Realisierung der Flanschbefestigung weist der Grundkörper beispielsweise einen ersten Anschlussflansch und das Abschlusselement einen zweiten Anschlussflansch auf. Diese beiden Anschlussflansche sind aneinander befestigt, insbesondere mittels einer Schraubverbindung. Die Flanschbefestigung und mithin die Anschlussflansche dienen zusätzlich der Befestigung der Trennwand. Beispielsweise wird die Trennwand zwischen den beiden Anschlussflanschen angeordnet und über die zur Verbindung der Anschlussflansche verwendete Schraubverbindung mit dem Grundkörper einerseits und dem Abschlusselement andererseits verbunden. Die Trennwand kann beispielsweise kugelkalottenförmig sein und hierbei eine in den dritten Speichertank hineinragende Wölbung aufweisen. So wird eine besonders druckfeste Ausgestaltung des ersten Speichertanks realisiert.

Schließlich kann im Rahmen einer weiteren Ausführungsform der Erfindung vorgesehen sein, dass ein mit dem ersten Speichertank strömungstechnisch verbundener erster Fluidanschluss, ein mit dem wenigstens einen zweiten Speichertank strömungstechnisch verbundener zweiter Fluidanschluss und ein mit dem dritten Speichertank strömungstechnisch verbundener dritter Fluidanschluss vorliegen, wobei der erste Fluidanschluss an dem Grundkörper und der dritte Fluidanschluss an dem Abschlusselement angeordnet sind. Die Fluidanschlüsse dienen dem Zuführen und Entnehmen des jeweiligen Fluids aus dem entsprechenden Speichertank. Durch die Anordnung des ersten Fluidanschlusses an dem Grundkörper und des dritten Fluidanschlusses an dem Abschlusselement wird eine direkte strömungstechnische Anbindung des jeweiligen Speichertanks möglich. Zudem wird durch die Anordnung des dritten Fluidanschlusses an dem Abschlusselement und nicht an dem Grundkörper eine strukturelle Schwächung des ersten Speichertanks auf vorteilhafte Art und Weise vermieden.

Die Erfindung betrifft weiterhin eine Fluid- und/oder Energiebereitstellungseinrichtung, mit einer Solarnutzungseinrichtung und/oder einer Windkraftanlage sowie mit einer Fluidspeichervorrichtung gemäß den Ausführungen im Rahmen dieser Beschreibung, wobei die Fluid- und/oder Energiebereitstellungseinrichtung dazu ausgebildet ist, mittels von der Solarnutzungseinrichtung und/oder von der Windkraftanlage bereitgestellte Energie Wasser durch Elektrolyse in Wasserstoff und Sauerstoff aufzuspalten und den Wasserstoff und den Sauerstoff zwischenzuspeichern. Dabei sind eine erste Tankanordnung für den Wasserstoff und eine zweite Tankanordnung für den Sauerstoff vorgesehen, wobei die erste Tankanordnung einen ersten Speichertank in einem mittels einer Gründung verankerten, sich in axialer Richtung bezüglich seiner Längsmittelachse in die Gründung hinein erstreckenden Speicherturm und die zweite Tankanordnung mehrere separat angeordnete zweite Speichertanks aufweist, die in Umfangsrichtung um den Speicherturm verteilt angeordnet, zur Versteifung des Speicherturms an diesem befestigt und sich an der Gründung abstützen und/oder an dieser befestigt sind.

Auf die Vorteile einer derartigen Ausgestaltung der Fluid- und/oder Energiebereitstellungseinrichtung beziehungsweise der Fluidspeichervorrichtung wurde bereits hingewiesen. Sowohl die Fluid- und/oder Energiebereitstellungseinrichtung als auch die Fluidspeichervorrichtung können gemäß den Ausführungen im Rahmen dieser Beschreibung weitergebildet sein, sodass insoweit auf diese verwiesen wird.

Die Fluid- und/oder die Energiebereitstellungseinrichtung verfügt - wie bereits erläutert - über die Einrichtung zur Nutzung solarer Energie und/oder die Einrichtung zur Nutzung von Windkraft. Erstere liegt in Form der Solarnutzungseinrichtung und letztere in Form der Windkraftanlage vor. Die Solarnutzungseinrichtung weist wenigstens einen Solarkollektor und/oder wenigstens ein Solarmodul auf. Der Solarkollektor ist zur Durchströmung mit einem Arbeitsfluid vorgesehen und ausgebildet. Bei hinreichender Sonneneinstrahlung erwärmt sich das den Solarkollektor durchströmende Arbeitsfluid, nimmt also Wärme auf. Diese Wärme kann nachfolgend zur Erzeugung von elektrischer Energie verwendet werden, welche wiederum unmittelbar bereitgestellt werden oder zur Umwandlung von Wasser in Wasserstoff und Sauerstoff herangezogen werden kann. Das Solarmodul, welches auch als Photovoltaikmodul bezeichnet werden kann, dient hingegen der direkten Umwandlung von solarer Energie in elektrische Energie. Auch diese elektrische Energie kann gemäß den vorstehenden Ausführungen verwendet werden. Die Wärme kann auch zwischengespeichert werden, nämlich mittels einer geeigneten Energiespeichereinrichtung.

Zusätzlich oder alternativ zu der Solarnutzungseinrichtung ist die Windkraftanlage vorgesehen. Diese dient einer Umwandlung von Windenergie in elektrische Energie. Hierzu verfügt die Windkraftanlage vorzugsweise über einen Rotor und einen mechanisch mit dem Rotor gekoppelten Generator. Auch diese elektrische Energie kann unmittelbar bereitgestellt und/oder zur Umwandlung von Wasser in Wasserstoff und Sauerstoff verwendet werden. Es kann auch vorgesehen sein, die von der Windkraftanlage und/oder des Solarmoduls beziehungsweise Photovoltaikmoduls bereitgestellte elektrische Energie in Wärme umzuwandeln und zwischenzuspeichern, insbesondere in derselben Energiespeichereinrichtung wie die Wärme der Solarnutzungseinrichtung. Hierzu ist beispielsweise ein Durchlauferhitzer vorgesehen, mittels welchem die elektrische Energie in Wärme umgewandelt wird, die der Energiespeichereinrichtung zugeführt wird. Der Durchlauferhitzer ist bevorzugt ein Druckdurchlauferhitzer. Er kann zum Beispiel an dem Speicherturm und/oder in dem Untergrund, auf welchem der Speicherturm angeordnet ist, vorliegen. Bevorzugt ist der Durchlauferhitzer an einer Außenwand des Speicherturms befestigt, insbesondere an der ersten Tankanordnung beziehungsweise dem ersten Speichertank. Bevorzugt sind die Solarnutzungseinrichtung und/oder die Windkraftanlage an der Fluidspeichervorrichtung angeordnet. Insbesondere sind sie an dem Speicherturm befestigt beziehungsweise stützen sich über den Speicherturm an der Gründung ab.

Besonders bevorzugt ist eine Ausgestaltung der Fluid- und/oder der Energiebereitstellungseinrichtung, welche zusätzlich zu der Solarnutzungseinrichtung oder der Windkraftanlage oder beiden eine Brennstoffzelleneinrichtung aufweist, mittels welcher Wasserstoff und Sauerstoff in elektrische Energie umgesetzt werden können. Eine derartige Ausgestaltung ermöglicht ein dauerhaftes Bereitstellen von elektrischer Energie. Steht regenerative Energie zur Verfügung, so wird diese in elektrische Energie umgewandelt, welche wiederum zumindest teilweise unmittelbar bereitgestellt und/oder zumindest teilweise zur Umwandlung von Wasser in Wasserstoff und Sauerstoff verwendet wird. Der Wasserstoff und der Sauerstoff werden in der Fluidspeichervorrichtung zwischengespeichert. Steht keine oder nicht hinreichend solare Energie zur Verfügung, so werden der Wasserstoff und der Sauerstoff der Brennstoffzelle zur Erzeugung elektrischer Energie zugeführt. Diese kann anschließend von der Fluid- und/oder Energiebereitstellungseinrichtung bereitgestellt werden, insbesondere für einen Verbraucher. Das Bereitstellen der mittels der Brennstoffzelle erzeugten elektrischen Energie erfolgt alternativ oder zusätzlich zu der direkten Bereitstellung der mittels der Solarnutzungseinrichtung und/oder der Windkraftanlage erzeugten elektrischen Energie.

Eine weitere Ausführungsform der Erfindung sieht vor, dass das Wasser in einem dritten Speichertank zwischengespeichert ist, der in dem Speicherturm angeordnet ist. Auf den dritten Speichertank wurde bereits eingegangen. Er dient der Zwischenspeicherung des Wassers, sodass die Fluid- und/oder Energiebereitstellungseinrichtung unabhängig von einer dauerhaften Wasserversorgung ist. Vielmehr ist es hinreichend, wenn sie in bestimmten Intervallen mit Wasser versorgt wird, mit welchem der dritte Speichertank gefüllt wird. Insoweit ist ein autarker Betrieb der Fluid- und/oder Energiebereitstellungseinrichtung sichergestellt.

Im Rahmen einer weiteren Ausführungsform der Erfindung kann vorgesehen sein, dass an dem Speicherturm eine den Speicherturm zumindest bereichsweise umgreifende Traganordnung für die Solarnutzungseinrichtung und/oder eine Stützanordnung für die Windkraftanlage ausgebildet sind. Die Traganordnung umgreift den Speicherturm beispielsweise nach Art einer Manschette. Vorzugsweise sind über die Traganordnung wenigstens zwei Paneele für die Anordnung von Solarkollektoren und/oder Solarmodulen an dem Speicherturm befestigt. Somit kann eine große effektive Fläche zur Nutzung der solaren Energie bereitgestellt werden. Zusätzlich oder alternativ zu der Traganordnung ist die Stützanordnung vorgesehen. Diese dient der Abstützung beziehungsweise Befestigung der Windkraftanlage an dem Speicherturm. Beispielsweise ist die Stützanordnung an dem konisch ausgebildeten Abschlusselement des Speicherturms angeordnet beziehungsweise befestigt. Hierdurch wird ein sehr hoher Integrationsgrad der Fluid- und/oder Energiebereitstellungseinrichtung erzielt.

Eine bevorzugte Ausgestaltung der Erfindung sieht vor, dass die Solarnutzungseinrichtung wenigstens einen Solarkollektor und/oder ein Solarmodul aufweist, das mittels einer Schwenkeinrichtung um wenigstens eine Schwenkachse bezüglich des Speicherturms schwenkbar ist. Auf den Solarkollektor und das Solarmodul wurde bereits eingegangen. Diese sollen mittels der Schwenkeinrichtung verschwenkbar angeordnet sein. Die Schwenkeinrichtung ermöglicht das Schwenken um die wenigstens eine Schwenkachse, vorzugsweise um mehrere verschiedene Schwenkachsen. Die Schwenkachse kann beispielsweise parallel zu der Längsmittelachse des Speicherturms verlaufen oder sogar mit dieser zusammenfallen. Alternativ kann die Schwenkachse senkrecht auf einer die Längsmittelachse des Speicherturms aufnehmenden Ebene stehen. Letzteres dient der Realisierung einer Azimutführung des Solarkollektors beziehungsweise des Solarmoduls. Besonders bevorzugt kann das Verschwenken mittels der Schwenkeinrichtung um beide der genannten Schwenkachsen durchgeführt werden, um den Solarkollektor und/oder das Solarmodul zuverlässig zu der Sonne ausrichten zu können, insbesondere unter einem bestimmten Winkel. Hierdurch wird eine besonders hohe Effizienz erzielt. Beispielsweise werden der Solarkollektor und/oder das Solarmodul senkrecht zur Sonne ausgerichtet, sodass also eine Normalenrichtung des Solarkollektors und/oder des Solarmoduls zur Sonne weist.

Eine weitere Ausgestaltung der Erfindung sieht vor, dass der wenigstens eine Solarkollektor strömungstechnisch an ein solarthermisches Kraftwerk angeschlossen ist, das zur Bereitstellung elektrischer Energie aus von dem Solarkollektor bereitgestellter thermischer Energie ausgebildet ist. Das solarthermische Kraftwerk ist beispielsweise gemäß der Druckschrift WO 2013/0567652 A1 ausgebildet, auf welche ausdrücklich Bezug genommen wird. Besonders bevorzugt ist das solarthermische Kraftwerk nach einem oder mehreren der Ansprüche der genannten Druckschrift ausgeführt.

Schließlich kann im Rahmen einer weiteren Ausführungsform der Erfindung vorgesehen sein, dass der wenigstens eine Solarkollektor strömungstechnisch an eine Energiespeichereinrichtung zur Zwischenspeicherung thermischer Energie angeschlossen ist. Die Energiespeichereinrichtung dient einer Zwischenspeicherung von mittels des Solarkollektors erwärmtem Fluid. Die Energiespeichereinrichtung ist besonders bevorzugt gemäß der Druckschrift WO 2016/000951 A1 ausgestaltet. Insbesondere weist die Energiespeichereinrichtung die Merkmale eines oder mehrerer der Ansprüche der genannten Druckschrift auf. Das Fluid der Energiespeichereinrichtung weist beispielsweise ein Druck von mindestens 50 bar, mindestens 75 bar, mindestens 90 bar oder mindestens 100 bar auf, wobei dieser Druck insbesondere bei einer Temperatur des Fluids von 300 °C vorliegt. Bevorzugt wird das Fluid auf einer Temperatur von mindestens 200 °C, mindestens 300 °C oder mindestens 400 °C gehalten.

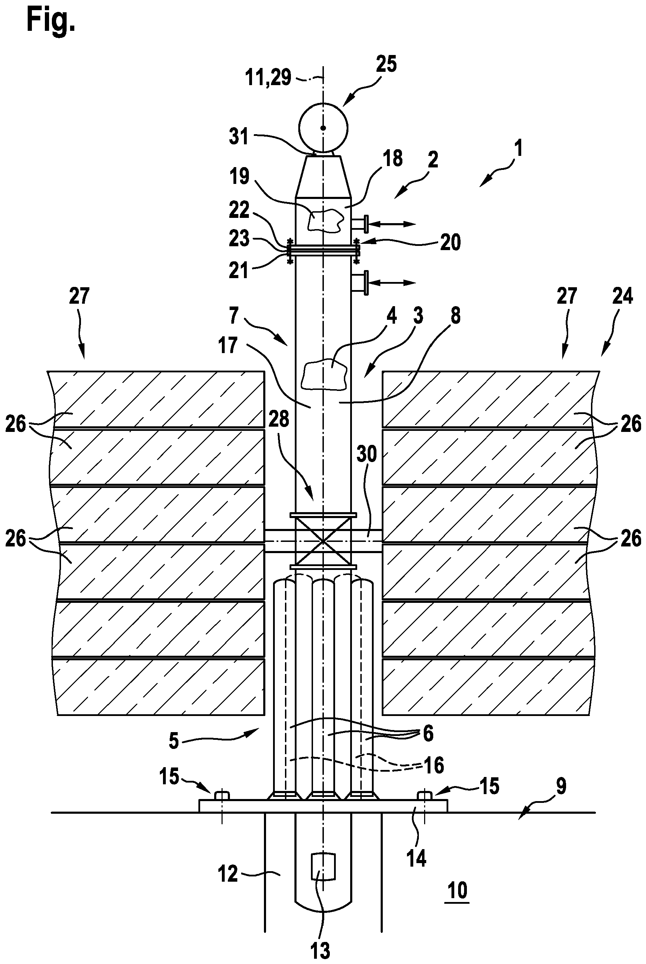

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Fluid- und/oder Energiebereitstellungseinrichtung mit einer Fluidspeichervorrichtung.

Die Figur zeigt eine schematische Darstellung einer Fluid- und/oder Energiebereitstellungseinrichtung 1, die eine Fluidspeichervorrichtung 2 aufweist. Diese verfügt wiederum über eine erste Tankanordnung 3 mit einem ersten Speichertank 4 sowie über eine zweite Tankanordnung 5 mit mehreren zweiten Speichertanks 6. Der erste Speichertank 4 ist in einem Speicherturm 7 ausgebildet, welcher aus wenigstens einem zylindrischen, insbesondere kreiszylindrischen Rohr 8 zusammengesetzt ist. Der Speicherturm 7 ist mittels einer ein Fundament 9 aufweisenden Gründung in einem Untergrund 10 verankert. Der Speicherturm 7 ist hierbei derart ausgestaltet, dass er in die Gründung hineinragt. Bevorzugt ist das Fundament 9 in radialer Richtung bezüglich einer Längsmittelachse 11 des Speicherturms 7 von diesem beabstandet angeordnet, sodass eine Ausnehmung 12 in dem Fundament 9 vorliegt, in welche der Speicherturm 7 endseitig eingreift.

In die Ausnehmung 12 mündet eine Zugangsöffnung 13 des Speicherturms 7 ein, welche als Mannloch ausgestaltet ist und entsprechende Abmessungen aufweist. Die Ausnehmung 12 beziehungsweise das Fundament 9 wird von einer Bodenplatte 14 übergriffen, welche vorzugsweise mittels einer Schraubverbindung 15 an dem Fundament 9 befestigt ist, welche der Gründung zugeordnet ist. Der Speicherturm 7 ist vorzugsweise an der Bodenplatte 14 befestigt. Zusätzlich oder alternativ gilt dies für die zweiten Speichertanks 6. Diese stützen sich beispielsweise endseitig an der Bodenplatte 14 ab.

Die zweiten Speichertanks 6 sind um den Speicherturm 7 verteilt angeordnet und zu dessen Versteifung an ihm befestigt. Hierzu sind die zweiten Speichertanks 6 beispielsweise in axialer Richtung durchgehend an dem Speicherturm 7 befestigt, beispielsweise durch Schweißen. An den zweiten Speichertanks 6 können wiederum weitere zweite Speichertanks 16 befestigt sein, vorzugsweise derart, dass sie beabstandet von dem Speicherturm 7 vorliegen. Das bedeutet, dass die weiteren zweiten Speichertanks 16 lediglich über die zweiten Speichertanks 6 an dem Speicherturm 7 angreifen. Der Speicherturm 7 weist einen Grundkörper 17 auf, an welchem die zweiten Speichertanks 6 befestigt sind und in welchem der erste Speichertank 4 ausgebildet ist. An dem Grundkörper 17 ist ein Abschlusselement 18 befestigt, welches wenigstens bereichsweise konisch ist. In dem Abschlusselement 18 ist ein dritter Speichertank 19 für ein drittes Fluid angeordnet beziehungsweise ausgebildet.

Der Grundkörper 17 und das Abschlusselement 18 sind über eine Flanschbefestigung 20 aneinander befestigt. Hierzu weist der Grundkörper 17 einen ersten Anschlussflansch 21 und das Abschlusselement 18 einen zweiten Anschlussflansch 22 auf. Die beiden Anschlussflansche 21 und 22 sind über eine Trennwand 23 miteinander verbunden, wobei die Trennwand 23 einerseits den ersten Speichertank 4 und andererseits den dritten Speichertank 19 begrenzt. Beispielsweise ist die Trennwand 23 gekrümmt, insbesondere kugelkalottenförmig gekrümmt, und ragt in den dritten Speichertank 19 hinein. Vor diesem Hintergrund ist der erste Speichertank 4 als Drucktank und der dritte Speichertank 19 als druckloser Tank ausgestaltet. Beispielsweise ist der erste Speichertank 4 druckfest bis mindestens 100 bar, mindestens 150 bar, mindestens 200 bar, mindestens 250 bar oder mindestens 300 bar. Das in dem dritten Speichertank 19 vorliegende dritte Fluid weist hingegen einen Druck auf, welcher einem Umgebungsdruck genau oder zumindest näherungsweise entspricht.

Zusätzlich zu der Fluidspeichervorrichtung 2 verfügt die Fluid- und/oder Energiebereitstellungseinrichtung 1 über eine Solarnutzungseinrichtung 24 sowie eine Windkraftanlage 25. Die Solarnutzungseinrichtung 24 weist wenigstens einen Solarkollektor 26, vorzugsweise eine Vielzahl von Solarkollektoren 26 auf. In dem hier dargestellten Ausführungsbeispiel sind lediglich einige Solarkollektor 26 beispielhaft gekennzeichnet. Zusätzlich oder alternativ zu dem wenigstens einen Solarkollektor 26 kann wenigstens ein Solarmodul vorliegen. Die nachfolgenden Ausführungen hinsichtlich der Anordnung des Solarkollektors 26 sind für die Anordnung eines solchen Solarmoduls entsprechend heranziehbar.

Die Solarkollektoren 26 sind in dem hier dargestellten Ausführungsbeispiel an zwei Paneelen 27 befestigt, welche auf gegenüberliegenden Seiten des Speicherturms 7 angeordnet sind. Die Paneele 27 sind über eine Schwenkeinrichtung 28 um wenigstens eine Schwenkachse schwenkbar an dem Speicherturm 7 gelagert. In dem hier dargestellten Ausführungsbeispiel sind die Paneele 27 mittels der Schwenkeinrichtung 28 um mehrere verschiedene Schwenkachsen schwenkbar, nämlich um eine Schwenkachse 29, die der Längsmittelachse 11 des Speicherturms 7 entspricht, und um eine Schwenkachse 30, welche senkrecht auf einer die Schwenkachse 29 aufnehmenden Ebene steht. Das Verschwenken um die mehreren Schwenkachsen 29 und 30 ermöglicht ein präzises Ausrichten der Solarkollektoren 26 zur Sonne.

Die Windkraftanlage 25 ist mittels einer Stützanordnung 31 an dem Speicherturm 7 befestigt, insbesondere an dessen dem Fundament 9 abgewandten Seite. Vorzugsweise schließt sich die Stützanordnung 31 an das Abschlusselement 18 an, insbesondere ist sie über dieses an dem Grundkörper 17 des Speicherturms 7 befestigt. Die Fluidspeichervorrichtung 2 beziehungswiese ihr Speicherturm 7 dient insoweit nicht nur der Zwischenspeicherung von Fluiden, sondern zudem der Anordnung und Befestigung der Solarnutzungseinrichtung sowie der Windkraftanlage 25. Selbstverständlich sind auch Ausführungsformen realisierbar, bei welchen die Solarnutzungseinrichtung 24 oder die Windkraftanlage 25 entfällt, sodass lediglich die jeweils andere Einrichtung beziehungsweise Anlage verbleibt.

Die beschriebene Fluid- und/oder Energiebereitstellungseinrichtung 1 hat den Vorteil, dass sie äußerst flexibel und zudem nahezu unterbrechungsfrei einsetzbar ist. Sie kann entweder zur Bereitstellung von Fluid, also beispielsweise Wasserstoff und/oder Sauerstoff, zur Bereitstellung von elektrischer Energie oder zur Bereitstellung von beidem verwendet werden. Mittels der Fluidspeichervorrichtung 2 wird zudem ein dauerhafter Betrieb sichergestellt. Liegt beispielsweise regenerative Energie vor, welche nicht zur Bereitstellung der elektrischen Energie verwendet wird, so kann diese zur Erzeugung von Wasserstoff und Sauerstoff aus Wasser aufgewandt werden. Der Wasserstoff und der Sauerstoff werden in der Fluidspeichervorrichtung 2 zwischengespeichert. Steht nicht hinreichend regenerative Energie zur Verfügung, um den Bedarf an elektrischer Energie zu decken, so können der Wasserstoff und der Sauerstoff aus der Fluidspeichervorrichtung 2 zur Bereitstellung von elektrischer Energie und/oder thermischer Energie beziehungsweise Wärme verwendet werden, nämlich indem sie einer hier nicht dargestellten Brennstoffzelle zugeführt werden.

## Patentansprüche

1. Fluidspeichervorrichtung (2) für eine Fluid- und/oder Energiebereitstellungseinrichtung (1), mit einer ersten Tankanordnung (3) für ein erstes Fluid und einer zweiten Tankanordnung (5) für ein zweites Fluid, wobei die erste Tankanordnung (3) einen ersten Speichertank (4) in einem mittels einer Gründung verankerten Speicherturm (7) und die zweite Tankanordnung (5) mehrere separat angeordnete zweite Speichertanks (6) aufweist, die in Umfangsrichtung um den Speicherturm (7) verteilt angeordnet, zur Versteifung des Speicherturms (7) an diesem befestigt und sich an der Gründung abstützen und/oder an dieser befestigt sind und/oder mehrfach an dem Speicherturm (7) befestigt sind, **dadurch gekennzeichnet, dass** der Speicherturm (7) sich in axialer Richtung bezüglich seiner Längsmittelachse (11) in die Gründung hinein erstreckt.

2. Fluidspeichervorrichtung nach Anspruch 1, **dadurch gekennzeichnet, dass** die zweiten Speichertanks (6) jeweils an mehreren diskreten Befestigungsstellen oder in axialer Richtung durchgehend an dem Speicherturm (7) befestigt sind.

3. Fluidspeichervorrichtung nach einem der vorhergehenden Ansprüche, **dadurch gekennzeichnet, dass** von dem Speicherturm (7) beabstandet weitere zweite Speichertanks (16) angeordnet sind, die an den zweiten Speichertanks (6) befestigt sind.

4. Fluidspeichervorrichtung nach einem der vorhergehenden Ansprüche, **dadurch gekennzeichnet, dass** die Gründung eine Bodenplatte (14) aufweist, die in radialer Richtung größere Abmessungen aufweist als der Speicherturm (7).

5. Fluidspeichervorrichtung nach einem der vorhergehenden Ansprüche, **dadurch gekennzeichnet, dass** der Speicherturm (7) die Bodenplatte (14) durchgreift, sodass auf einer ersten Seite der Bodenplatte (14) ein erster Teil des Speicherturms (7) und auf einer der ersten Seite gegenüberliegenden Seite der Bodenplatte (14) ein zweiter Teil des Speicherturms (7) vorliegt, wobei die zweiten Speichertanks (6) an dem ersten Teil des Speicherturms (7) befestigt sind und der zweite Teil des Speicherturms (7) eine als Mannloch ausgebildete Zugangsöffnung (13), insbesondere für den ersten Speichertank (4), aufweist.

6. Fluidspeichervorrichtung nach einem der vorhergehenden Ansprüche, **dadurch gekennzeichnet, dass** in dem Speicherturm (7) ein zu dem ersten Speichertank (4) koaxial angeordneter dritter Speichertank (19) für ein drittes Fluid angeordnet ist.

7. Fluidspeichervorrichtung nach einem der vorhergehenden Ansprüche, **dadurch gekennzeichnet, dass** der dritte Speichertank (19) in einem zumindest bereichsweise konisch ausgebildeten Abschlusselement (18) des Speicherturms (7) angeordnet ist.

8. Fluidspeichervorrichtung nach einem der vorhergehenden Ansprüche, **dadurch gekennzeichnet, dass** das Abschlusselement (18) über eine Flanschbefestigung (20) an einem Grundkörper (17) des Speicherturms (7) befestigt ist, wobei zwischen dem Abschlusselement (18) und dem Grundkörper (17) eine den ersten Speichertank (4) und den dritten Speichertank (19) strömungstechnisch voneinander separierende Trennwand (23) angeordnet ist.

9. Fluidspeichervorrichtung nach einem der vorhergehenden Ansprüche, **dadurch gekennzeichnet, dass** ein mit dem ersten Speichertank (4) strömungstechnisch verbundener erster Fluidanschluss, ein mit dem wenigstens einen zweiten Speichertank (6) strömungstechnisch verbundener zweiter Fluidanschluss und ein mit dem dritten Speichertank (19) strömungstechnisch verbundener dritter Fluidanschluss vorliegen, wobei der erste Fluidanschluss an dem Grundkörper (17) und der dritte Fluidanschluss an dem Abschlusselement (18) angeordnet sind.

10. Fluid- und/oder Energiebereitstellungseinrichtung (1), mit einer Solarnutzungseinrichtung (24) und/oder einer Windkraftanlage (25) sowie mit einer Fluidspeichervorrichtung (2) nach einem oder mehreren der vorhergehenden Ansprüche, wobei die Fluid- und/oder Energiebereitstellungseinrichtung (1) dazu ausgebildet ist, mittels von der Solarnutzungseinrichtung (24) und/oder von der Windkraftanlage (25) bereitgestellter Energie Wasser durch Elektrolyse in Wasserstoff und Sauerstoff aufzuspalten und den Wasserstoff und den Sauerstoff zwischenzuspeichern, mit einer ersten Tankanordnung (3) für den Wasserstoff und einer zweiten Tankanordnung (5) für den Sauerstoff, wobei die erste Tankanordnung (3) einen ersten Speichertank (4) in einem mittels einer Gründung verankerten Speicherturm (7) und die zweite Tankanordnung (5) mehrere separat angeordnete zweite Speichertanks (6) aufweist, die in Umfangsrichtung um den Speicherturm (7) verteilt angeordnet, zur Versteifung des Speicherturms (7) an diesem befestigt sind und sich an der Gründung abstützen und/oder an dieser befestigt sind und/oder mehrfach an dem Speicherturm (7) befestigt sind, **dadurch gekennzeichnet, dass** der Speicherturm (7) sich in axialer Richtung bezüglich seiner Längsmittelachse (11) in die Gründung hinein erstreckt.

11. Fluid- und/oder Energiebereitstellungseinrichtung nach Anspruch 10, **dadurch gekennzeichnet, dass** das Wasser in einem dritten Speichertank (19) zwischengespeichert ist, der in dem Speicherturm (7) angeordnet ist.

12. Fluid- und/oder Energiebereitstellungseinrichtung nach einem der vorhergehenden Ansprüche, **dadurch gekennzeichnet, dass** an dem Speicherturm (7) eine den Speicherturm (7) zumindest bereichsweise umgreifende Traganordnung für die Solarnutzungseinrichtung (24) und/oder eine Stützanordnung (31) für die Windkraftanlage (25) ausgebildet sind.

13. Fluid- und/oder Energiebereitstellungseinrichtung nach einem der vorhergehenden Ansprüche, **dadurch gekennzeichnet, dass** die Solarnutzungseinrichtung (24) wenigstens einen Solarkollektor (26) und/oder ein Solarmodul aufweist, das mittels einer Schwenkeinrichtung (28) um wenigstens eine Schwenkachse (29,30) bezüglich des Speicherturms (7) schwenkbar ist.

14. Fluid- und/oder Energiebereitstellungseinrichtung nach einem der vorhergehenden Ansprüche, **dadurch gekennzeichnet, dass** der wenigstens eine Solarkollektor (26) strömungstechnisch an ein solarthermisches Kraftwerk angeschlossen ist, das zur Bereitstellung elektrischer Energie aus von dem Solarkollektor (26) bereitgestellter thermischer Energie ausgebildet ist.

15. Fluid- und/oder Energiebereitstellungseinrichtung nach einem der vorhergehenden Ansprüche, **dadurch gekennzeichnet, dass** der wenigstens eine Solarkollektor (26) strömungstechnisch an eine Energiespeichereinrichtung zur Zwischenspeicherung thermischer Energie angeschlossen ist.

## Claims

1. Fluid storage apparatus (2) for a fluid and/or energy supply device (1), with a first tank arrangement (3) for a first fluid and a second tank arrangement (5) for a second fluid, wherein the first tank arrangement (3) comprises a first storage tank (4) in a storage tower (7) anchored by means of a foundation and the second tank arrangement (5) comprises a plurality of separately arranged second storage tanks (6), which are arranged distributed around the storage tower (7) in circumferential direction, are attached to the storage tower (7) to stiffen the latter and are supported on the foundation and/or are attached to the latter and/or are multiply attached to the storage tower (7), **characterised in that** the storage tower (7) extends into the foundation in the axial direction with respect to its longitudinal central axis (11).

2. Fluid storage apparatus according to claim 1, **characterised in that** the second storage tanks (6) are each attached to the storage tower (7) at a plurality of discrete attachment points or continuously in the axial direction.

3. Fluid storage apparatus according to one of the preceding claims, **characterised in that** further second storage tanks (16) are arranged at a distance from the storage tower (7) and are attached to the second storage tanks (6).

4. Fluid storage apparatus according to one of the preceding claims, **characterised in that** the foundation comprises a base plate (14) which has larger dimensions in the radial direction than the storage tower (7).

5. Fluid storage apparatus according to one of the preceding claims, **characterised in that** the storage tower (7) extends through the base plate (14), so that a first part of the storage tower (7) is present on a first side of the base plate (14) and a second part of the storage tower (7) is present on a side of the base plate (14) opposite the first side, wherein the second storage tanks (6) are attached to the first part of the storage tower (7) and the second part of the storage tower (7) comprises an access opening (13) in the form of a manhole, in particular for the first storage tank (4).

6. Fluid storage apparatus according to one of the preceding claims, **characterised in that** a third storage tank (19) for a third fluid, arranged coaxially with the first storage tank (4), is arranged in the storage tower (7).

7. Fluid storage apparatus according to one of the preceding claims, **characterised in that** the third storage tank (19) is arranged in an at least partially conical end element (18) of the storage tower (7).

8. Fluid storage apparatus according to one of the preceding claims, **characterised in that** the end element (18) is fastened to a base body (17) of the storage tower (7) via a flange fastening (20), wherein a partition wall (23) fluidically separating the first storage tank (4) and the third storage tank (19) from one another is arranged between the end element (18) and the base body (17).

9. Fluid storage apparatus according to one of the preceding claims, **characterised in that** a first fluid connection fluidically connected to the first storage tank (4), a second fluid connection fluidically connected to the at least one second storage tank (6) and a third fluid connection fluidically connected to the third storage tank (19) are present, wherein the first fluid connection is arranged on the base body (17) and the third fluid connection is arranged on the end element (18).

10. Fluid and/or energy supply device (1), with a solar utilisation device (24) and/or a wind power plant (25) and a fluid storage apparatus (2) according to one or more of the preceding claims, wherein the fluid and/or energy supply device (1) is designed to split water by electrolysis into hydrogen and oxygen by means of energy provided by the solar utilisation device (24) and/or by the wind power plant (25) and intermediately storing the hydrogen and the oxygen, with a first tank arrangement (3) for the hydrogen and a second tank arrangement (5) for the oxygen, wherein the first tank arrangement (3) comprises a first storage tank (4) in a storage tower (7) anchored by means of a foundation and the second tank arrangement (5) comprises a plurality of separately arranged second storage tanks (6) which are distributed in circumferential direction around the storage tower (7), are attached to the storage tower (7) to reinforce the latter and are supported on and/or attached to the foundation and/or are multiply attached to the storage tower (7), **characterised in that** the storage tower (7) extends into the foundation in the axial direction with respect to its longitudinal central axis (11).

11. Fluid and/or energy supply device according to claim 10, **characterised in that** the water is temporarily stored in a third storage tank (19), which is arranged in the storage tower (7).

12. Fluid and/or energy supply device according to one of the preceding claims, **characterised in that** a carrier arrangement for the solar utilisation device (24) is formed on the storage tower (7) at least partially surrounding the storage tower (7) and/or a support arrangement (31) for the wind power plant (25) is formed on the storage tower (7).

13. Fluid and/or energy supply device according to one of the preceding claims, **characterised in that** the solar utilisation device (24) comprises at least one solar collector (26) and/or a solar module which is pivotable about at least one pivot axis (29, 30) with respect to the storage tower (7) by means of a pivoting device (28).

14. Fluid and/or energy supply device according to one of the preceding claims, **characterised in that** the at least one solar collector (26) is fluidically connected to a solar thermal power plant which is designed to provide electrical energy from thermal energy provided by the solar collector (26).

15. Fluid and/or energy supply device according to one of the preceding claims, **characterised in that** the at least one solar collector (26) is fluidically connected to an energy storage device for the intermediate storage of thermal energy.

## Revendications

1. Dispositif de stockage de fluide (2) destiné à un dispositif de fourniture de fluide et/ou d'énergie (1), comprenant un premier agencement de réservoir (3) destiné à un premier fluide et un deuxième agencement de réservoir (5) destiné à un deuxième fluide, dans lequel le premier agencement de réservoir (3) présente un premier réservoir de stockage (4) au sein d'une tour de stockage (7) ancrée au moyen d'une fondation et le deuxième agencement de réservoir (5) présente plusieurs deuxièmes réservoirs de stockage (6) qui sont agencés autour de la tour de stockage (7) de manière répartie dans la direction périphérique, qui sont fixés à la tour de stockage (7) afin de la rigidifier, et qui s'appuient sur ladite fondation, et/ou qui sont fixés à celle-ci et/ou sont fixés plusieurs fois à la tour de stockage (7), **caractérisé en ce que** la tour de stockage (7) s'étend dans la fondation dans la direction axiale par rapport à son axe médian longitudinal (11).

2. Dispositif de stockage de fluide selon la revendication 1, **caractérisé en ce que** les deuxièmes réservoirs de stockage (6) sont fixés à la tour de stockage (7) respectivement au niveau de plusieurs points de fixation discrets ou de manière continue dans la direction axiale.

3. Dispositif de stockage de fluide selon l'une quelconque des revendications précédentes, **caractérisé en ce que** des deuxièmes réservoirs de stockage (16) supplémentaires qui sont fixés aux deuxièmes réservoirs de stockage (6), sont agencés à distance de la tour de stockage (7).

4. Dispositif de stockage de fluide selon l'une quelconque des revendications précédentes, **caractérisé en ce que** la fondation présente une plaque de fond (14) présentant des dimensions supérieures à celles de la tour de stockage (7) dans la direction radiale.

5. Dispositif de stockage de fluide selon l'une quelconque des revendications précédentes, **caractérisé en ce que** la tour de stockage (7) traverse la plaque de fond (14) de sorte qu'une première partie de la tour de stockage (7) est présente sur un premier côté de la plaque de fond (14) et une deuxième partie de la tour de stockage (7) est présente sur un côté de la plaque de fond (14) opposé au premier côté, dans lequel les deuxièmes réservoirs de stockage (6) sont fixés à la première partie de la tour de stockage (7) et la deuxième partie de la tour de stockage (7) présente une ouverture d'accès (13) réalisée sous la forme d'un trou d'homme, en particulier destinée au premier réservoir de stockage (4).

6. Dispositif de stockage de fluide selon l'une quelconque des revendications précédentes, **caractérisé en ce qu'**un troisième réservoir de stockage (19) destiné à un troisième fluide est agencé dans la tour de stockage (7) de manière coaxiale par rapport au premier réservoir de stockage (4).

7. Dispositif de stockage de fluide selon l'une quelconque des revendications précédentes, **caractérisé en ce que** le troisième réservoir de stockage (19) est agencé dans un élément de fermeture (18) au moins localement conique de la tour de stockage (7).

8. Dispositif de stockage de fluide selon l'une quelconque des revendications précédentes, **caractérisé en ce que** l'élément de fermeture (18) est fixé à un corps de base (17) de la tour de stockage (7) par l'intermédiaire d'une fixation à bride (20), dans lequel une paroi de séparation (23) séparant le premier réservoir de stockage (4) et le troisième réservoir de stockage (19) l'un de l'autre de manière fluidique est agencée entre l'élément de fermeture (18) et le corps de base (17).

9. Dispositif de stockage de fluide selon l'une quelconque des revendications précédentes, **caractérisé en ce qu'**un premier raccord de fluide relié de manière fluidique au premier réservoir de stockage (4), un deuxième raccord de fluide relié de manière fluidique au au moins un deuxième réservoir de stockage (6) et un troisième raccord de fluide relié de manière fluidique au troisième réservoir de stockage (19) sont présents, dans lequel le premier raccord de fluide est agencé sur le corps de base (17) et le troisième raccord de fluide est agencé sur l'élément de fermeture (18).

10. Dispositif de fourniture de fluide et/ou d'énergie (1), comprenant un dispositif d'exploitation de l'énergie solaire (24) et/ou une éolienne (25) ainsi qu'un dispositif de stockage de fluide (2) selon une ou plusieurs des revendications précédentes, dans lequel le dispositif de fourniture de fluide et/ou d'énergie (1) est conçu pour décomposer l'eau en hydrogène et en oxygène par électrolyse au moyen de l'énergie fournie par le dispositif d'exploitation de l'énergie solaire (24) et/ou l'éolienne (25), et stocker temporairement l'hydrogène et l'oxygène avec un premier agencement de réservoir (3) destiné à l'hydrogène et un deuxième agencement de réservoir (5) destiné à l'oxygène, dans lequel le premier agencement de réservoir (3) présente un premier réservoir de stockage (4) au sein d'une tour de stockage (7) ancrée au moyen d'une fondation et le deuxième agencement de réservoir (5) présente plusieurs deuxièmes réservoirs de stockage (6) qui sont agencés autour de la tour de stockage de manière répartie dans le sens circonférentiel (7), qui sont fixés à la tour de stockage (7) afin de la rigidifier, et qui s'appuient sur ladite fondation, et/ou qui sont fixés à celle-ci et/ou sont fixés plusieurs fois à la tour de stockage (7), **caractérisé en ce que** la tour de stockage (7) s'étend dans la fondation dans la direction axiale par rapport à son axe médian longitudinal (11).

11. Dispositif de fourniture de fluide et/ou d'énergie selon la revendication 10, **caractérisé en ce que** l'eau est stockée temporairement dans un troisième réservoir de stockage (19) agencé dans la tour de stockage (7).

12. Dispositif de fourniture de fluide et/ou d'énergie selon l'une quelconque des revendications précédentes, **caractérisé en ce qu'**un agencement porteur entourant au moins localement la tour de stockage (7) et destiné au dispositif d'exploitation de l'énergie solaire (24) et/ou un agencement de support (31) destiné à l'éolienne (25) sont réalisés au niveau de la tour de stockage (7).

13. Dispositif de fourniture de fluide et/ou d'énergie selon l'une quelconque des revendications précédentes, **caractérisé en ce que** le dispositif d'exploitation de l'énergie solaire (24) présente au moins un collecteur solaire (26) et/ou un module solaire pouvant pivoter par rapport à la tour de stockage (7) autour d'au moins un axe de pivotement (29, 30) au moyen d'un dispositif de pivotement (28).

14. Dispositif de fourniture de fluide et/ou d'énergie selon l'une quelconque des revendications précédentes, **caractérisé en ce que** le au moins un collecteur solaire (26) est raccordé de manière fluidique à une centrale solaire thermique conçue pour fournir de l'énergie électrique à partir de l'énergie thermique fournie par le collecteur solaire (26).

15. Dispositif de fourniture de fluide et/ou d'énergie selon l'une quelconque des revendications précédentes, **caractérisé en ce que** le au moins un collecteur solaire (26) est raccordé de manière fluidique à un dispositif de stockage d'énergie destiné au stockage intermédiaire d'énergie thermique.
